(19) Europäisches Patentamt
European Patent Office
Office européen des brevets

(11) Veröffentlichungsnummer: **0 036 385**
**B1**

(12) # EUROPÄISCHE PATENTSCHRIFT

(45) Veröffentlichungstag der Patentschrift: **02.05.84**

(51) Int. Cl.³: **A 01 N 25/22**, A 01 N 53/00

(21) Anmeldenummer: **81810067.9**

(22) Anmeldetag: **27.02.81**

(54) **Insektizide Dämpfe abgebende Zusammensetzung auf Pyrethrinoidbasis.**

(30) Priorität: **05.03.80 LU 82225**

(43) Veröffentlichungstag der Anmeldung: **23.09.81 Patentblatt 81/38**

(45) Bekanntmachung des Hinweises auf die Patenterteilung: **02.05.84 Patentblatt 84/18**

(84) Benannte Vertragsstaaten: **AT BE CH DE FR IT LI LU**

(56) Entgegenhaltungen:
**FR-A- 1 320 375**
**FR-A- 2 253 025**
**FR-A- 2 322 543**
**US-A- 3 224 973**

(73) Patentinhaber: **Airwick AG**
**Postfach**
**CH-4002 Basel (CH)**

(72) Erfinder: **Hennart, Claude**
**Le Clos Baron**
**F-95000 Seraincourt (FR)**
Erfinder: **Blanc, René**
**6, Allée de la Cerisale**
**F-86240 Ligugé (FR)**

(74) Vertreter: **Schirner, Rolf et al**
**Patentabteilung der CIBA-GEIGY AG Postfach**
**CH-4002 Basel (CH)**

**EP 0 036 385 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Insektizide Dämpfe abgebende Zusammensetzung auf Pyrethrinoidbasis

Die vorliegende Erfindung betrifft zur Abgabe von Insektiziden Dämpfen bestimmte Zusammensetzungen, dadurch gekennzeichnet, daß sie eine Verbindung der Familie der Pyrethrinoide und einen neuen Stabilisator enthalten.

Es ist bekannt, insektizide Substanzen zur Abgabe von zur Vernichtung von Insekten dienenden Dämpfen im Inneren von bewohnten Räumen zu verwenden. Es existiert jedoch nur eine einzige Substanz, die befähigt ist, bei Zimmertemperatur eine zur Erlangung einer guten insektiziden Wirksamkeit hinreichende Verdampfungsrate abzugeben ; diese Substanz ist die unter dem Namen Dichlorvos bekannte Organophosphorverbindung ; ihre Toxizität ist jedoch so hoch (orale akute LD 50 µm 55 mg/kg), daß anderen insektiziden Mitteln der Vorzug gegeben wird ; die letzteren gehören vorzugsweise zur Familie der Pyrethrinoide, denn diese sind im allgemeinen für den Menschen und für Haustiere sehr wenig toxisch. Sie benötigen jedoch für eine Verdampfung in hinreichender Konzentration eine erhöhte Temperatur und/oder eine sehr große Verdampfungsfläche.

In der FR-PS 2 322 546 der CIBA-GEIGY AG ist eine Vorrichtung zur Abgabe von Pyrethrinoiddämpfen beschrieben, bei welcher eine Temperatur im Bereich von 65 bis 90 °C verwendet wird, die jedoch eine Verdampfungsfläche benötigt, die mehrere Quadratdezimeter erreicht.

In der FR-PS 1 384 062 und in der IT-PS 713 459 der FUMAKILLA Ltd. wird eine Vorrichtung zur Abgabe von Pyrethrinoiddämpfen beschrieben, die nur eine Fläche von einigen Quadratzentimetern aufweist, aber eine höhere Temperatur benötigt. Vorrichtungen dieses Typs sind weltweit im Handel und verwenden eine Temperatur, die im allgemeinen im Bereich von 150 bis 160 °C liegt.

Nun ist jedoch bekannt, daß bei Tempearturen dieser Größenordnung die Pyrethrinoide eine sehr schnelle und hochgradige Zersetzung erleiden ; Beispiele für diese Zersetzung bei Temperaturen im Bereich von 100 bis 160 °C werden in den bereitsangeführten Patenten der FUMAKILLA Ltd. gegeben (12 bis 69 % Zersetzung in 8 Stunden).

Man hat versucht, dieser Tatsache durch Verwendung von Stabilisatoren abzuhelfen, die aus verschiedenen chemischen Klassen ausgewählt werden. In mehreren Patenten wird vorgeschlagen, Arylamine wie die Phenylnaphthylamine (FR-OS 2 226 112 ; US-PS'en 3 723 615, 3 819 823 und 3 934 023) oder Derivate des p-Phenylendiamins (JP-PS'en 73.98 023 und 73.98 024) zu verwenden. Es ist bekannt, daß diese Verbindungen besonders toxisch sind und deshalb in der Praxis nicht verwendet werden. Man zieht ihnen substituierte Derivate des Phenols wie das 2-t-Butyl-4-methoxyphenol (BHA) und 2,6-Di-t-butyl-4-methylphenol (BHT) oder Biphenole wie das Bis-(3-t-butyl-5-äthyl-2-hydroxy-phenyl)-methan vor (FR-OS'en 2 226 112 und 2 322 543 ; JP-PA'en 72.43 226 und 73.98 024 ; GB-PS'en 1 288 138, 1 295 039, 1 404 262, 1 427 309, 1 429 437 und 1 443 533). Leider ist die Wirkung dieser phenolischen Verbindungen oft ungenügend, µm die Pyrethrinoide bei Temperaturen über 100 °C und besonders bei solchen über 150 °C zu schützen.

Es wurde daher auch die Verwendung von Verbindungen der Familie der Benzodioxole vorgeschlagen (JP-PA 73.99 328) : die Verwendung dieser Verbindungen wie z. B. des Piperonylbutoxids, das das am häufigsten verwendete ist, ist seit langem bekannt, aber sie müssen in sehr beträchtlichen Mengen verwendet werden ; dies führt zu einer beachtlichen Kostenerhöhung und daneben zum Auftreten von Gerüchen, sobald das Produkt in Gebrauch genommen wird.

Es wurde nun gefunden, daß gewisse Hydroxybenzylphosphonate gestatten, eine Stabilisierung der Pyrethrinoide nicht nur bei Temperaturen im Bereich von 150 bis 160 °C, sondern auch bei bedeutend höheren Temperaturen zu erreichen, wodurch die Verwendung von Pyrethrinoiden ermöglicht wird, die bedeutend weniger flüchtig sind als die bisher üblicherweise verwendeten.

Die Hydroxybenzylphosphonate sind bekannte Verbindungen, die in den FR-PS'en 1 320 375 und 2 253 025 und in der US-PS 3 224 973 beschrieben sind. Diese Verbindungen sind wegen ihrer stabilisierenden Eigenschaften bekannt, die es gestatten, Polymere wie z. B. Kautschuk, Polyäthylen und als Schmiermittel verwendbare Öle und Fette zu schützen ; sie sind jedoch noch nie dazu verwendet oder vorgeschlagen worden, die Zersetzung von Molekülen zu verhindern, die so verschieden von Polymeren und Schmiermitteln sind, wie dies bei den Insektiziden der Familie der Pyrethrinoide der Fall ist, und noch dazu bei besonders hohen Temperaturen.

Es ist gebräuchlich, in Insektizidvorrichtungen des erwähnten Typs Allethrin oder seine optisch aktiven Isomere zu verwenden, da diese Verbindungen einen Dampfdruck aufweisen, der in der Familie der Pyrethrinoide verhältnismäßig hoch ist ; jedoch besitzen sie nicht immer eine hinreichend letale Wirkung gegen gewisse Insekten wie die Fliegen, und es ist daher von Interesse, allein oder zusätzlich andere Verbindungen verwenden zu können, um diese letale Wirkung und/oder die Schnelligkeit der Wirkung erhöhen zu können ; leider werden diese anderen Verbindungen, die eine erhöhte Temperatur benötigen, durch die Wärme schnell zersetzt.

Auch ist die Verwendung eines Stabilisators bekannten Typs in der Absicht, diese Zersetzung zu hemmen, im allgemeinen nicht hinreichend, und zwar wahrscheinlich in Folge seiner zu schnellen Verdampfung.

Die Erfindung behebt diesen Nachteil und gestattet die Zubereitung von bei erhöhten Temperaturen, auch bei deren längerer Dauer, beständigen Zusammensetzungen auf Pyrethrinoidbasis.

Die Erfindung betrifft daher zur Abgabe von insektiziden Dämpfen beim Erhitzen dienende Zusammensetzungen, welche umfassen :

A. mindestens eine insektizide Substanz der Pyrethrinoidfamilie, sowie

B. gegebenenfalls einen Zusatz, der gegenüber der Substanz A inert und unter Verdünnungsmitteln, Verdickern, Parfümen, Synergisten, Farben, insektenabweisenden Mitteln, festen Trägern und Brennstoffen ausgewählt wird, wobei die besagten Zusammensetzungen dadurch gekennzeichnet sind, dass sie

C. einen Stabilisator enthalten, ausgewählt unter den Verbindungen der chemischen Formel

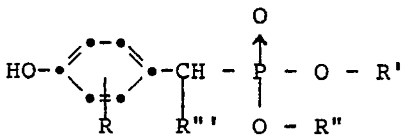

in welcher R einen oder zwei Alkylreste mit 1 bis 12 Kohlenstoffatomen, R′ und R″, die gleich oder verschieden sein können, jedes einen Alkylrest mit 1 bis 18 Kohlenstoffatomen oder R′ und R″ zusammen eine Alkylengruppe mit 2 bis 7 Kohlenstoffatomen, eine 2-Methyl-, 2-Aethyl oder 2,2-Dimethyläthylengruppe oder eine 3-Methyl-, 2-Aethyl-, 2,2-Dimethyl-, 2,2-Diäthyl-, 2-Methyl-2-äthyl-, 2-Methyl-2-propyl- oder 2,2,4-Trimethyl-propylengruppe und R‴ Wasserstoff oder einen Alkylrest mit 1 bis 7 Kohlenstoffatomen darstellen.

Als Beispiele des Stabilisators C können vor allem die folgenden Verbindungen genannt werden (diese Verbindungen sind in den FR-PS'en 1 320 375 und 2 253 025 und in der US-PS 3 224 973 beschrieben) :

(4-Hydroxy-benzyl)-O,O-dibutyl-phosphonat
(4-Hydroxy-benzyl)-O,O-butan-diyl-(1,4)-phosphonat
4-Hydroxy-benzyl)-O,O-butan-diyl-(1,2)-phosphonat
(4-Hydroxy-benzyl)-O,O-pentan-diyl-(1,5)-phosphonat
(2-Äthyl-4-hydroxy-benzyl)-O,O-dibutyl-phosphonat
1-(3-Nonyl-4-hydroxy-benzyl)-butyl-O,O-di-oct-2-yl-phosphonat
(3-t-Butyl-4-hydroxy-benzyl)-O,O-dihexyl-phosphonat
1-(3-Amyl-4-hydroxy-phenyl)-äthyl-O,O-diäthyl-phosphonat
(3-Methyl-4-hydroxy-5-isopropyl-benzyl)-O,O-diisopropylphosphonat
(3-Methyl-4-dodecyl-(3)-4-hydroxybenzyl-O,O-diheptylphosphonat
(3,5-Di-t-butyl-4-hydroxy-benzyl)-O,O-dioctadecylphosphonat
(3-Methyl-4-hydroxy-5-t-butyl-benzyl)-O,O-dioctadecylphosphonat
(3-Methyl-4-hydroxy-5-t-butyl-benzy)-O,O-diisopropylphosphonat
(3,5-Dimethyl-4-hydroxy-benzyl)-O,O-dibutyl-phosphonat
(3,5-Diäthyl-4-hydroxy-benzyl)-O,O-dibutyl-phosphonat
(3,5-Dipropyl-4-hydroxy-benzyl)-O,O-dipropyl-phosphonat
(3,5-Diisopropyl-4-hydroxy-benzyl)-O,O-diäthyl-phosphonat
(3,5-Dibutyl-4-hydroxy-benzyl)-O,O-dimethyl-phosphonat
(3,5-Diisobutyl-4-hydroxy-benzyl)-O,O-diäthyl-phosphonat
(3,5-Di-t-butyl-4-hydroxy-benzyl)-O,O-dimethyl-phosphonat
(3,5-Di-t-butyl-4-hydroxy-benzyl)-O-äthyl-O-methyl-phosphonat
(3,5-Di-t-butyl-4-hydroxy-benzyl)-O,O-dipropyl-phosphonat
(3,5-Di-t-butyl-4-hydroxy-benzyl)-O,O-diisopropyl-phosphonat
(3,5-Di-t-butyl-4-hydroxy-benzyl)-O,O-dibutyl-phosphonat
(3,5-Di-t-butyl-4-hydroxy-benzyl)-O-butyl-O-methyl-phosphonat
(3,5-Di-t-butyl-4-hydroxy-benzyl)-O,O-diisobutyl-phosphonat
(3,5-Di-t-butyl-4-hydroxy-benzyl)-O,O-di-t-butyl-phosphonat
(3,5-Di-t-butyl-4-hydroxy-benzyl)-O,O-dipentyl-phosphonat
(3,5-Di-t-butyl-4-hydroxy-benzyl)-O,O-diisopentyl-phosphonat
1-(3-Äthyl-4-hydroxy-5-isopropyl-phenyl)-äthyl-O,O-dipentyl-phosphonat
1-(3-Dodecyl-4-hydroxy-5-octyl-phenyl)-pentyl-O,O-didecyl-phosphonat
1-[3-Amyl-4-hydroxy-5-(heptyl-(2))-phenyl]-propyl-O,O-diheptyl-phosphonat
1-(3-Butyl-4-hydroxy-5-hexyl-phenyl)2-äthyl-hexyl-O,O-diundecyl-phosphonat
(3,5-Di-t-butyl-4-hydroxy-benzyl)-O,O-äthan-diyl-(1,2)-phosphonat
(3,5-Di-t-butyl-4-hydroxy-benzyl)-O,O-propan-diyl-(1,2)-phosphonat
(3,5-Di-t-butyl-4-hydroxy-benzyl)-O,O-propan-diyl-(1,3)-phosphonat
(3,5-Di-t-butyl-4-hydroxy-benzyl)-O,O-butan-diyl-(1,2)-phosphonat
(3,5-Di-t-butyl-4-hydroxy-benzyl)-O,O-butan-diyl-(1,3)-phosphonat
(3,5-Di-t-butyl-4-hydroxy-benzyl)-O,O-pentan-diyl-(1,5)-phosphonat
(3,5-Di-t-butyl-4-hydroxy-benzyl)-O,O-(2,2-dimethyl-propan-diyl-(1,3))phosphonat

(3,5-Di-t-butyl-4-hydroxy-benzyl)-O,O-(2-methyl-pentan-diyl-(2,4))phosphonat
(3,5-Di-t-butyl-4-hydroxy-benzyl)-O,O-(2-methyl-propan-diyl-(1,2))phosphonat
(3,5-Di-t-butyl-4-hydroxy-benzyl)-O,O-2(2,2-diäthyl-propan-diyl-(1,3))-phosphonat
(3,5-Di-t-butyl-4-hydroxy-benzyl)-O,O-(2-methyl-2-propyl-propan-diyl-(1,3))-phosphonat
(3,5-Di-t-amyl-4-hydroxy-benzyl)-O,O(2-methyl-2-äthyl-propan-diyl-(1,3))-phosphonat.

Bevorzugte Stabilisatoren sind die (3,5-Dialkyl-4-hydroxy-benzyl)-phosphonate und insbesondere die (3,5-Di-t-butyl-4-hydroxy-benzyl)-phosphonate. Insektizide Substanzen sind alle diejenigen, die dem Fachmann als zur Familie der Pyrethrinoide genorig bekannt sind, ohne Rücksicht auf ihre Flüchtigkeit. Unter diesen Substanzen können insbesondere die Ester genannt werden, die aus einer Cyclopropankarbonsäure wie z. B. der 2,2,3,3-Tetramethyl-cyclopropankarbonsäure oder der Chrysanthemsäure oder einer der 3-(2,2-Butano- oder 2,2-Dibrom- oder 2,2-Dichlor- oder 2,2-Difluor-vinyl)-2,2-dimethyl-cyclopropankarbonsäuren in ihren razemischen oder optisch aktiven Formen (d und/oder 1, cis und/oder trans), und den folgenden Alkoholen gebildet sind :

2-Methyl-3-äthyl-4-oxo-cyclopent-2-enol
2-Methyl-3-allyl-4-oxo-cyclopent-2-enol
2-Methyl-3-methallyl-4-oxo-cyclopent-2-enol
2-Methyl-3-crotyl-4-oxo-cyclopent-2-enol
2-Methyl-3-(3-methyl-prop-2-enyl)-4-oxo-cyclopent-2-enol
2-Methyl-3-(2-chlor-allyl)-4-oxo-cyclopent-2-enol
2-Methyl-3-(3-chlor-allyl)-4-oxo-cyclopent-2-enol
2-Methyl-3-furfuryl-4-oxo-cyclopent-2-enol
1-Phenyl-prop-2-ynol
1-(3-Chlor-phenyl)-prop-2-ynol
1-(3-Fluor-phenyl)-prop-2-ynol
1-(3-Trifluor-methyl-phenyl)-prop-2-ynol
1-(Thien-2-yl)-prop-2-ynol
1-(Fur-2-yl)-prop-2-ynol
4-Phenyl-but-2-enol
4-(3-Methyl-phenyl)-but-2-enol
4-(2-Methyl-phenyl)-but-2-enol
4-(2,3-Dimethyl-phenyl)-but-2-enol
4-(2-Methoxy-phenyl)-but-2-enol
4-(2-Chlor-phenyl)-but-2-enol
4-(3-Chlor-phenyl)-but-2-enol
4-(2,3-Dichlor-phenyl)-but-2-enol
4-(3-Brom-phenyl)-but-2-enol
4-Phenyl-but-2-ynol
4-(Fur-2-yl)-but-2-ynol
4-(Thien-2-yl)-but-2-ynol
5-Methyl-5-hexen-2-ynol
5-Methyl-hexa-2,5-dienol
5,6-Dimethyl-5-hepten-2-ynol
2-Methyl-benzyl-alkohol
3-Methyl-benzyl-alkohol
4-Methyl-benzyl-alkohol
2,3-Dimethyl-benzyl-alkohol
2,4-Dimethyl-benzyl-alkohol
2,5-Dimethyl-benzyl-alkohol
2,6-Dimethyl-benzyl-alkohol
3,4-Dimethyl-benzyl-alkohol
3,5-Dimethyl-benzyl-alkohol
2,4,6-Trimethyl-benzyl-alkohol
4-allyl-benzyl-alkohol
2,6-Dimethyl-4-allyl-benzyl-alkohol
4-Methallyl-benzyl-alkohol
4-(But-3-enyl)-benzyl-alkohol
4-Vinyl-benzyl-alkohol
4-Cyano-benzyl-alkohol
4-Trifluor-methyl-benzyl-alkohol
4-Nitro-benzyl-alkohol
3-Methyl-furfuryl-alkohol
5-Methyl-furfuryl-alkohol
3,5-Dimethyl-furfuryl-alkohol

4,5-Dimethyl-furfuryl-alkohol
5-Allyl-furfuryl-alkohol
5-Propargyl-furfuryl-alkohol
2-Methyl-fur-3-yl-methanol
2,5-Dimethyl-fur-3-yl-methanol
2,4,5-Trimethyl-fur-3-yl-methanol
5-Allyl-fur-3-yl-methanol
2-Methyl-5-allyl-fur-3-yl-methanol
2-Methyl-5-propargyl-fur-3-yl-methanol
Tetrahydrophthalimido-methanol
5-Benzyl-fur-3-yl-methanol
5-(alpha-Cyano-benzyl)-fur-3-yl-methanol
5-(alpha-Methynyl-benzyl)-fur-3-yl-methanol
3-Phenoxy-benzyl-alkohol
3-Phenoxy-(alpha-cyano)-benzyl-alkohol
3-Phenoxy-(alpha-methynyl)-benzyl-alkohol.

Diese Ester umfassen insbesondere die Substanzen, die unter den Namen Allethrin, Bioallethrin, S-Bioallethrin, Cinerin, Furethrin, Dimethrin, Benathrin, Kadethrin, Prothrin, Furamethrin, Proparthrin, Tetramethrin, Resmethrin, Bioresmethrin, Phenothrin, d-Phenothrin, Permethrin, Biopermethrin, Cypermethrin, Bromethrin, Decamethrin und Fluorethrin bekannt sind.

Synergisten werden, soweit mindestens einer in der Zusammensetzung vorhanden ist, unter den Benzodioxolen, polychlorierten Äthern und N-Alkyl-norborn-5-en-2,3-dicarboximiden ausgewählt.

Geeignete Benzodioxole sind, beispielsweise Safrol, Isosafrol, 5-Cyano-benzo-1,3-dioxol, 5-Äthynyl-benzo-1,3-dioxol, 5-Hydroxymethyl-benzo-1,3-dioxol, 5-Cyano-methyl-benzo-1,3-dioxol, 5,6-Dichlor-benzo-1,3-dioxol, 5-Chlor-6-cyano-benzo-1,3-dioxol, 5-Brom-6-cyano-benzo-1,3-dioxol, 5-Chlor-6-cyanomethyl-benzo-1,3-dioxol, 5-Chlor-6-hydroxy-benzo-1,3-dioxol, 5-Chlor-6-hydroxy-methyl-benzo-1,3-dioxol, 5-Chlor-6-äthynyl-6-benzo-1,3-dioxol.

Geeignete polychlorierte Äther sind, z. B., 1,1,1,2,6,7,7,7-Octachlor-4-oxa-heptan und 1,1,2,6,7,7-hexachlor-4-oxa-hepta-1,6-dien.

Geeignete N-Alkylnorbornen-2,3-dicarboximide sind z. B. diejenigen, in denen der Alkylrest ein Isobutyl, sec-Butyl, t-Butyl, Isopentyl, 2-Methyl-butyl, Isohexyl, 2-Methyl-hexyl, 2-Äthyl-butyl oder Isodecylrest ist.

Geeignete insektenabweisende Mittel sind z. B. Dialkyl-succinate, Malleate und Fumarate, Alkylmandelate, N,N-Dialkyl-benzamide und -toluamide, Cyclopropan-carbon-amide, 1-Alkanoyl-hexahydrobenzofurane und 3,6-Dioxadecyl-alkanoate, Citronellal und seine Dialkylacetale und Alkylhexandiole.

Verdünnungsmittel werden, soweit mindestens eines davon in der Zusammensetzung anwesend ist, unter denjenigen flüssigen oder festen organischen Verbindungen ausgewählt, welche ein Lösungsvermögen für die insektizide Substanz A aufweisen. Die verwendeten Verdünnungsmittel besitzen vorzugsweise eine Flüchtigkeit nahe derjenigen der insektiziden Substanz A.

Um den Gebrauch der Zusammensetzungen auch für gewisse Anwendungsformen zu gestatten, schließt die Erfindung jedoch die Verwendung eines viel flüchtigeren Verdünners wie z. B. Dichlormethan, Trichloräthan, Trichloräthylen, Perchloräthylen, Aceton, Butan-2-on, 4-Methyl-pentan-2-on, Methyl-, Äthyl-, Propyl-, Isopropyl-, Butyl-, Amyl-acetate und andere niedrigmolekulare aliphatische Ester nicht aus.

Als Verdünnungsmittel von geringer Flüchtigkeit können insbesondere die unter die folgenden chemischen Familien fallenden ausgewählt werden :

(1) Monoester gebildet aus Alkanolen und monocarboxylierten Kohlenwasserstoffen, wie z. B. Alkylacetaten wie Hexadecyl- oder Octadecylacetat, Alkyl-propionaten wie Hexadecyl- und Octadecyl-propionat, Alkyl-butyraten und Isobutyraten wie Dodecyl-, Tetradecyl-, Hexadecyl- oder Octadecylbutyrat, Alkylhexanoaten, Alkyl-octanoaten, Alkyl-decanoaten, Alkyl-lauraten, -undecanoaten, -undecenoaten und -myristaten wie den mit Hexyl-, Octyl-, Decyl- oder Dodecylalkohol gebildeten Alkyl-palmitaten und -stearaten wie den mit Propyl-, Butyl-, Isobutyl-, Amyl-, Hexyl- oder Octyl-alkohol, und Alkyl-benzoaten, -phenylacetaten und -phenylpropionaten wie den mit Hexyl-, Octyl-, Decyl- oder Dodecylalkohol gebildeten.

(2) Diester gebildet aus Alkanolen und dicarboxylierten Kohlenwasserstoffen wie, z. B. Dialkyladipaten wie Dioctyl-adipat. Dinonyl-adipat, Didecyl-adipat und Didodecyl-adipat, Dialkyl-sebazaten wie Dibutyl-sebazat, Dipentyl-sebazat, Dioctyl-sebazat und Didecyl-sebazat, Dialkyl-azelaten wie Dioctylazelat und Didecyl-azelat, Dialkyl-phthalaten wie Dibutyl-phthalat, Dioctyl-phthalat und Didecyl-phthalat, Bis-undecyl-phthalat, Bis-dodecyl-phthalat, Bis-tridecyl-phthalat, Bis-tetradecyl-phthalat und Dicetylphthalat ;

(3) Diester gebildet aus unsubstituierten oder alkyl-substituierten Phenolen und dicarboxylierten Kohlenwasserstoffen wie z. B. Diaryl-phthalaten wie Di-phenyl-phthalat und den Dicresyl-phthalaten ;

(4) Diester gebildet aus alkyl-substituierten oder unsubstitutierten Cycloalkanolen und dicarboxylierten Kohlenwasserstoffen wie z. B. Dicyclohexyl-phthalat, Bis(methylcyclohexyl)-phthalaten, Bis-(tri-

methylcyclohexyl)-phthalaten und Bis-(tetramethylcyclohexyl)-phthalaten ;

(5) Diester gebildet aus Phenylalkanolen und dicarboxylierten Kohlenwasserstoffen wie z. B. Dibenzyl-sebazat, Dibenzyl-azelat und Bis-(phenylpropyl)-sebazaten ;

(6) Diester gebildet aus Alkandiolen und monocarboxylierten Kohlenwasserstoffen wie z. B. dem Diisobutyrat des 2,2,4-Trimethyl-pentan-1,3-diols ;

(7) Triester gebildet aus alkyl-substituierten oder unsubstituierten Phenolen und Phosphorsäure, wie z. B. Triphenyl-phosphat, Tris-(4-t-butylphenyl)-phosphat und den Tricresylphosphaten ;

(8) Triester gebildet aus Alkanolen und Phosphorsäure, wie z. B. Trioctyl-phosphat, Tridecylphosphat und Tridodecyl-phosphat ;

(9) Polyalkylenglykole wie z. B. Polyäthylenglykole und Polypropylenglykole ;

(10) Fettalkohole wie z. B. Hexadecanol, Octadecanol und Octadecen-9-ol ;

(11) Fettsäuren wie z. B. Laurinsäure, Myristinsäure, Palmitinsäure, Stearinsäure und Ölsäure ;

(12) Alkane mit mindestens 18 Kohlenstoffatomen wie, z. B., Octadecan, Eicosan, Docosan und Tetracosan und ihre unter den Namen Vaselineöl, Paraffinöl, Schweröl, Gasoil, Heizöl, Road-oil, Ventilöl, Mazout, Vaseline, Petrolatum, Gatsch, Paraffin, Microwachs, Ozokerit und Ceresi bekannten Gemische ;

(13) Alkanone mit mindestens 18 Kohlenstoffatomen wie, z. B., Caprinon, Lauron, Myriston, Palmiton und Stearon ;

(14) Alkenone mit mindestens 18 Kohlenstoffatomen wie z. B. Heneicosa-1,20-dien-11-on and Oleon.

Verdicker sind z. B. Metallsalze von Fettsäuren wie Aluminium oder Magnesium-mono-, di- und tristearate oder Salze von Fettsäure und Amin, wie Dioleate des Hexadecylamino-propylen-amins, Octadecyl-aminopropylen-amins oder Octadecenyl-aminopropylen-amins, oder modifizierte Montmorillonite wie die Ammoniumsalze von Dimethyl-di-(höher molekulares Alkyl)-Bentonit.

Feste Träger werden, soweit mindestens einer davon in der Zusammensetzung enthalten ist, aus organischen Pulvern, Mineralpulvern und absorbierenden Massen ausgewählt.

Organische Pulver werden unter den dem Fachmann bekannten wie, z. B. Stärke, Getreidemehl, Holzmehl, Zuckern ausgewählt, abhängig davon, wofür die Zusammensetzung angewandt werden soll.

Feste Absorbentien können aus Papier, Cellulose, Karton aus Holzfasern, Getreidefasern, Alfalfafasern, Baumwollfasern, Altpapierabfällen, Asbestfasern, Glasfasern, Wollfasern und/oder polymeren Fasern und auch aus Terracotta, gefritteter Tonerde und unglasiertem Porzellan ausgewählt werden.

Die den festen Anteil bildende Materie kann ebenso Füllstoffe wie organische Pulver, Mineralpulver, Pigmente, Farben und Bindemittel enthalten.

Die festen Materialien können in allen bekannten Formen wie z. B. als Platten oder Blöcke ausgebildet sein. Die Platten können rund, oval, quadratisch, rechteckig, dreieckig oder beliebig vieleckig sein ; ihre Gesamtoberfläche kann von wenigen Quadratzentimetern bis zu mehreren Quadratdezimetern betragen und ihre Dicke kann von 0,1 bis 6 mm variieren.

Blöcke können kubisch, zylindrisch oder von elliptischem oder beliebigem polygonalem Querschnitt sein ; ihre Gesamtoberfläche kann von einigen Quadratzentimetern bis zu mehreren Quadratdezimetern variieren.

Brennstoffe, soweit mindestens einer davon in der Zusammensetzung vorhanden ist, sind dazu bestimmt, eine Selbstverbrennung der letzteren zu gestatten und sind aus den dem Fachmann bekannten wie z. B. Metall- oder Ammonium-nitraten und Nitrozellulose ausgewählt.

Vorzugsweise enthält die Zusammensetzung mindestens 5 Gew.% der insektiziden Substanz A.

Die Zusammensetzung enthält vorzugsweise 5 bis 100 Gewichtsteile an Stabilisator C je 100 Teilen der insektiziden Substanz A ; es ist noch besser, wenn dieser Anteil im Bereich von 10 bis 50 Teilen des Stabilisators C liegt.

Enthält die Zusammensetzung keinen festen Träger, so wird sie durch einfaches Mischen der Bestandteile ohne oder mit Erhitzen zubereitet.

Enthält die Zusammensetzung einen festen Träger wie z. B. einen absorbierenden Feststoff, so wird sie durch Imprägnieren dieses Feststoffes mit einer flüssigen Mischung der anderen Bestandteile der Zusammensetzung zubereitet. Das Imprägnieren kann durch Aufgießen der flüssigen Mischung auf den Träger oder Tränken des Trägers mit der Flüssigkeit erfolgen, wobei dem Tränken ein Abschwenken folgen kann ; diese Zubereitung kann auch z. B. unter Verwendung einer Dosierpumpe oder einer Sprühbühne von konstantem Ausstoß mechanisiert werden ; auch kann eine Abpreßwalze mit Druckregelung verwendet werden, um ein Zurückbehalten von Flüssigkeit in der gewünschten Menge zu gestatten. Man kann zum selben Zweck eine Abschleuderzentrifuge mit Geschwindigkeitsregelung verwenden. Eine Imprägnationsmethode von industriellem Interesse besteht in der Verwendung von Bändern großer Länge, die kontinuierlich imprägniert und darauf auf gewünschte Dimensionen zugeschnitten werden. Die Imprägnierung kann auch durchgeführt werden, indem der feste Träger in Anwesenheit der flüssigen Mischung unter Vakuum gesetzt wird.

Auch kann das Imprägnieren automatisch mittels einem Gerät durchgeführt werden, das eine oder mehrere Injektionsspritzen und ein Förderband aufweist, auf welchem die zu imprägnierenden festen Träger unter diesen vorbeigeführt werden. Auch kann eine Lösung der flüssigen Mischung, wie weiter oben bereits erwähnt, in einem flüchtigen Lösungsmittel, das anschließend verdunstet, verwendet werden.

Enthält die Zusammensetzung einen festen Träger wie z. B. ein Pulver und einen Brennstoff, um ein

selbstbrennbares Produkt zu erzielen, so wird sie durch Vermischen der Bestandteile mit Wasser oder einem flüchtigen Lösungsmittel zubereitet, um eine Paste zu erhalten, die ausgeformt oder extrudiert und dann einer Trocknung nach einem dem Fachmann bekannten Verfahren z. B. in einem Heißlufttrockner oder einem Vakuumschrank unterworfen wird.

Daß die Zusammensetzungen nach der Erfindung von Interesse sind, ist in den folgenden Testbeispielen veranschaulicht.

Testbeispiel 1

Es wurden unten angegebenen Zusammensetzungen 1-A und 1-B verwendet, die durch Imprägnieren von Cellulose-tabletten von 34 × 21 × 3 mm Größe mit der flüssigen Mischung der anderen Bestandteile erhalten wurden :

| | 1-A | 1-B |
|---|---|---|
| Bioresmethrin | 50 mg | 50 mg |
| Stabilisator (a) | - | 20 mg |
| Farbe (b) | 1 mg | 1 mg |
| Cellulose | 880 mg | 880 mg |

(a) (4-Hydroxy-3,5-di-t-butyl-benzyl)-O,O-diäthyl-phosphonat
(b) Organolblau JN.

Die so imprägnierten Tabletten wurden jede auf ein geeignetes Teil einer für diese Verwendung bestimmten im Handel befindlichen Vorrichtung gelegt, die einen in einem Keramikblock mit oberer Heizfläche von 35 × 20 mm untergebrachten Heizwiderstand von 6 800 Ω umfaßt.

Die Vorrichtungen mit den Tabletten wurden dann in eine Apparatur, die zum Sammeln aller während des Betriebs freigesetzten Dämpfe dient, gestellt und während 3 Stunden mit Wechselstrom von 220 V beschickt, wobei die Temperatur der Heizfläche 162 °C betrug.

Am Ende dieser Behandlungszeit wurden die Mengen unzersetzten Bioresmethrins, die einerseits in den Tabletten und andererseits in den aufgefangenen Dämpfen vorhanden waren, analytisch gemessen :

| | 1-A | 1-B |
|---|---|---|
| Menge in der Tablette | 17,5 mg | 48,0 mg |
| Menge in den Dämpfen | 1,5 mg | 1,5 mg |
| unzersetzte Gesamtmenge | 19,0 mg | 49,5 mg |
| zersetzte Menge | 31,0 mg (62 %) | 0,5 mg (1 %) |

Testbeispiel 2

Es wurde wie im Testbeispiel 1 verfahren, wobei dieselbe Vorrichtung sowie die unten aufgeführten Zusammensetzungen 2-A und 2-B verwendet wurden :

| | 2-A | 2-B |
|---|---|---|
| d-Phenothrin | 50 mg | 50 mg |
| Stabilisator(a) | - | 10 mg |
| Cellulose | 880 mg | 880 mg |

Die Vorrichtung wurde an eine Wechselstromquelle von 250 V angeschlossen, wodurch eine Temperatur von 197 °C erreicht werden konnte.

Die nach dreistündigem Betrieb gefundenen Mengen an unzersetztem d-Phenothrin gestatteten die Aufstellung der folgenden Tafel :

| | 2-A | 2-B |
|---|---|---|
| Menge in der Tablette | 5,0 mg | 27,5 mg |
| Menge in den Dämpfen | 15,0 mg | 19,5 mg |
| unzersetzte Gesamtmenge | 20,0 mg | 47,0 mg |
| zersetzte Menge | 30,0 mg (60 %) | 3,0 mg (6 %) |

Testbeispiel 3

Es wurde wie im Testbeispiel 1 verfahren, wobei dieselbe Vorrichtung sowie die unten aufgeführten Zusammensetzungen 3-A und 3-B verwendet wurden :

| | 3-A | 3-B |
|---|---|---|
| Tetramethrin | 50 mg | 50 mg |
| Stabilisator(a) | - | 20 mg |
| Cellulose | 880 mg | 880 mg |

Die Vorrichtung wurde an eine Wechselstromquelle von 250 V angeschlossen, wodurch eine Temperatur von 197 °C erreicht werden konnte.

Die nach dreistündigem Betrieb gefundenen Mengen an unzersetztem Tetramethrin gestatteten die Aufstellung der folgenden Tafel :

| | 3-A | 3-B |
|---|---|---|
| Menge in der Tablette | 12,0 mg | 25,0 mg |
| Menge in den Dämpfen | 8,5 mg | 20,0 mg |
| unzersetzte Gesamtmenge | 20,5 mg | 45,0 mg |
| zersetzte Menge | 29,5 mg (59 %) | 5,0 mg (10 %) |

Testbeispiel 4

Es wurde wie im Testbeispiel 1 verfahren, wobei dieselbe Vorrichtung sowie die unten aufgeführten Zusammensetzungen 4-A und 4-B verwendet wurden :

| | 4-A | 4-B |
|---|---|---|
| Bioallethrin | 50 mg | 50 mg |
| Stabilisator (a) | - | 10 mg |
| Synergist (c) | 250 mg | 250 mg |
| Dioctylsebazat | 250 mg | 250 mg |
| Farbe (b) | - | 7 mg |
| Cellulose | 880 mg | 880 mg |

(c) 1,1,1,2,6,7,7,7-Octachlor-4-oxaheptan.

Die Vorrichtung wurde an eine Wechselstromquelle von 220 V angeschlossen, wodurch eine Temperatur von 162 °C erreicht werden konnte.

Die nach dreistündigem Betrieb gefundenen Mengen an unzersetztem Bioallethrin gestatteten die Aufstellung der folgenden Tafel :

| | 4-A | 4-B |
|---|---|---|
| Menge in der Tablette | 32 mg | 47 mg |
| Menge in den Dämpfen | 4 mg | 3 mg |
| unzersetzte Gesamtmenge | 36 mg | 50 mg |
| zersetzte Menge | 14 mg (28 %) | 0 mg (0 %) |

Testbeispiel 5

Es wurde wie im Testbeispiel 1 verfahren, wobei dieselbe Vorrichtung sowie die unten aufgeführte Zusammensetzung 5-A verwendet wurden :

| | |
|---|---|
| S-Bioallethrin | 90 mg |
| Stabilisator (a) | 10 mg |
| Butylstearat | 90 mg |
| Cellulose | 414 mg (d) |

(d) Dicke der Tabletten : 1,5 mm.

Die Vorrichtung wurde mit Wechselstrom gespeist, so daß eine Temperatur von 162 °C während 8 Stunden aufrechterhalten wurde, an deren Ende die Mengen an verdampftem und zurückgebliebenem S-Bioallethrin durch Analyse gemessen wurden ; die Ergebnisse waren die folgenden :

| | |
|---|---|
| Menge in der Tablette | 9,6 mg |
| Menge in den Dämpfen | 78,7 mg |
| unzersetzte Gesamtmenge | 88,3 mg |
| zersetzte Menge | 1,7 mg (1,9 %) |

Testbeispiel 6

Es wurde wie im Testbeispiel 1 unter Verwendung der unten aufgeführten Zusammensetzung 6-A verfahren, die durch Imprägnieren von runden Cellulosetabletten von 2 $cm^2$ Oberfläche und 1,25 mm Dicke erhalten wurde :

| | |
|---|---|
| S-Bioallethrin | 20 mg |
| Stabilisator (a) | 1,25 mg |
| Cellulose | 125 mg |

Die Vorrichtung wurde mit Wechselstrom gespeist, so daß eine Temperatur von 162 °C während 6 Stunden aufrechterhalten wurde, an deren Ende die Mengen an verdampftem und zurückgebliebenem S-Bioallethrin durch Analyse gemessen wurden ; die Ergebnisse waren die folgenden :

| | |
|---|---|
| Menge in der Tablette | 0 mg |
| Menge in den Dämpfen | 18,6 mg |
| unzersetzte Gesamtmenge | 18,6 mg |
| zersetzte Menge | 1,4 mg (7 %) |

Testbeispiel 7

Es wurde wie im Testbeispiel 1 unter Verwendung einer eine obere Heizfläche 36 × 40 mm aufweisenden Vorrichtung verfahren, die zwei Heizwiderstände von 6 800 Ω umfaßte, von denen jeder in einem Keramikblock untergebracht war, und die parellel an eine Wechselstromquelle von 193 V angeschlossen waren, um die Temperatur der Heizfläche auf 160 °C zu bringen.

Es wurden jeweils die unten beschriebenen Tabletten 7-A bis 7-D mit einer Größe von 35 × 30 × 1,5 mm verwendet.

| | 7-A | 7-B | 7-C | 7-D |
|---|---|---|---|---|
| d-Phenothrin | 40 mg | 50 mg | 50 mg | 40 mg |
| Stabilisator(a) | 10 mg | 10 mg | 5 mg | 2 mg |
| Cellulose | 630 mg | 630 mg | 630 mg | 630 mg |

Die Tabletten wurden jeweils auf das beheizte Teil der Vorrichtung während 8 Stunden gelegt, an deren Ende die Menge an verdampftem und zurückgebliebenem d-Phenothrin durch Analyse gemessen wurden ; die Ergebnisse waren die folgenden :

| | 7-A | 7-B | 7-C | 7-D |
|---|---|---|---|---|
| Menge in der Tablette | 25,0 mg | 30,0 mg | 28,0 mg | 17,0 mg |
| Menge in den Dämpfen | 14,3 mg | 16,7 mg | 18,2 mg | 15,9 mg |
| unzersetzte Gesamtmenge | 39,3 mg | 46,7 mg | 46,2 mg | 32,9 mg |
| zersetzte Menge | 0,7 mg (1,8 %) | 3,3 mg (6,6 %) | 3,8 mg (7,6 %) | 7,1 mg (17,8 %) |

Testbeispiel 8

Es wurde wie im Testbeispiel 1 unter Verwendung derselben Vorrichtung und der unten aufgeführten Zusammensetzungen 8-A und 8-B verfahren :

| | 8-A | 8-B |
|---|---|---|
| Permethrin | 50 mg | 50 mg |
| Stabilisator (a) | - | 15 mg |
| Cellulose | 880 mg | 880 mg |

Die Vorrichtung wurde an eine Wechselstromquelle angeschlossen, um auf der Heizfläche eine Temperatur von 260 °C zu erhalten, und die Mengen an verdampftem und zurückgebliebenem Permethrin wurden nach dreistündigem Betrieb durch Analyse gemessen ; die Ergebnisse waren die folgenden :

| | 8-A | 8-B |
|---|---|---|
| Menge in der Tablette | 12,6 mg | 17,6 mg |
| Menge in den Dämpfen | 26,1 mg | 30,4 mg |
| unzersetzte Gesamtmenge | 38,7 mg | 48,0 mg |
| zersetzte Menge | 11,3 mg (22,6 %) | 2,0 mg (4 %) |

Testbeispiel 9

Es wurde wie im Testbeispiel 1 unter Verwendung derselben Vorrichtung und der unten aufgeführten Zusammensetzungen 9-A, 9-B und 9-C verfahren :

| | 9-A | 9-B | 9-C |
|---|---|---|---|
| Decamethrin | 50 mg | 50 mg | 50 mg |
| Stabilisator (a) | - | 10 mg | 20 mg |
| Cellulose | 880 mg | 880 mg | 880 mg |

Die Vorrichtung wurde an eine Wechselstromquelle angeschlossen, um auf der Heizfläche eine Temperatur von 260 °C zu erhalten, und die Mengen an verdampftem und zurückgebliebenem Decamethrin wurden nach dreistündigem Betrieb durch Analyse gemessen ; die Ergebnisse waren die folgenden :

| | 9-A | 9-B | 9-C |
|---|---|---|---|
| Menge in der Tablette | 30 mg | 40 mg | 41 mg |
| Menge in den Dämpfen | 4 mg | 6.5 mg | 7 mg |
| unzersetzte Gesamtmenge | 34 mg | 46.5 mg | 48 mg |
| zersetzte Menge | 16 mg (32 %) | 3.5 mg (7 %) | 2 mg (4 %) |

Testbeispiel 10

Es wurde wie im Testbeispiel 1 verfahren, aber unter Verwendung einer Vorrichtung, welche eine obere Heizfläche von 36 × 40 mm aufwies und zwei Heizwiderstände von 6 800 Ω enthielt, von denen jeder in einem Keramikblock untergebracht war, und die parallel mit einer Wechselstromquelle von 193 V angeschlossen waren, um die Heizfläche auf eine Temperatur von 160 °C zu bringen.

Es wurden jeweils die unten aufgeführten Tabletten 10-A bis 10-E mit den Dimensionen 35 × 40 × 2,6 mm verwendet.

| | 10-A | 10-B | 10-C | 10-D | 10-E |
|---|---|---|---|---|---|
| Bioresmethrin | 50.0 mg | 50.0 mg | 50,0 mg | 50,0 mg | 50.0 mg |
| Stabilisator (a) | - | 4.0 mg | 2.5 mg | 5.0 mg | - |
| BHA (d) | - | - | - | - | 2,5 mg |
| BHT (d') | 2,5 mg | - | - | - | - |
| Cellulose | 1680 mg | 1680 mg | 1680 mg | 1680 mg | 1680 mg |
| aktives OH (Micromol) | 11.3 | 11,2 | 7.0 | 14,0 | 13,9 |

d) 2-t-Butyl-4-methoxy-phenol
d') 2,6-Di-t-butyl-4-methyl-phenol.

Die Tabletten wurden jede für sich auf das beheizte Teil der Vorrichtung während 3 Stunden aufgebracht, an deren Ende die Mengen an verdampftem und zurückgebliebenem Bioresmethrin durch Analyse gemessen wurden ; die Ergebnisse waren die folgenden :

| | 10-A | 10-B | 10-C | 10-D | 10-E |
|---|---|---|---|---|---|
| Menge in der Tablette | 25,0 mg | 35,5 mg | 34,9 mg | 36,5 mg | 30,0 mg |
| Menge in den Dämpfen | 10,0 mg | 9,6 mg | 9,2 mg | 10,0 mg | 10,0 mg |
| unzersetzte Gesamtmenge | 35,0 mg | 45,1 mg | 44,1 mg | 46,5 mg | 40,0 mg |
| zersetzte Menge | 15,0 mg (30 %) | 4,9 mg (9,8 %) | 5,9 mg (11,8 %) | 3,5 mg (7 %) | 10,0 mg (20 %) |

Testbeispiel 11

Es wurde wie im Testbeispiel 10 verfahren, wobei dieselbe Vorrichtung und die nachstehenden Zusammensetzungen 11-A bis 11-E mit den Dimensionen 35 × 40 × 2,6 mm verwendet wurden :

| | 11-A | 11-B | 11-C | 11-D | 11-E |
|---|---|---|---|---|---|
| Tetramethrin | 50,0 mg | 50,0 mg | 50,0 mg | 50,0 mg | 50,0 mg |
| Stabilisator (a) | - | 8,4 mg | 5,0 mg | 10,0 mg | - |
| Bisphenol A (e) | 5,0 mg | - | - | - | - |
| Bisphenol B (e') | - | - | - | - | 5,0 mg |
| Cellulose | 1680 mg | 1680 mg | 1680 mg | 1680 mg | 1680 mg |
| aktives OH(Micromol) | 23,7 | 23,6 | 14,0 | 28,1 | 29,4 |

(e) Bis-(3,5-di-t-butyl-4-hydroxy-phenyl)-methan
(e') Bis-(2-hydroxy-3-t-butyl-5-methyl-phenyl)-methan

Die Vorrichtung wurde an eine Wechselstromquelle von 250 V angeschlossen, so daß eine Temperatur von 197 °C erreicht werden konnte.

Die Tabletten wurden jede für sich auf das beheizte Teil der Vorrichtung während 3 Stunden aufgebracht, an deren Ende die Mengen an verdampftem und zurückgebliebenem Tetramethrin durch Analyse gemessen wurden ; die Ergebnisse waren die folgenden :

| | 11-A | 11-B | 11-C | 11-D | 11-E |
|---|---|---|---|---|---|
| Menge in der Tablette | 25,0 mg | 29,5 mg | 29,0 mg | 29,9 mg | 20,0 mg |
| Menge in den Dämpfen | 8,5 mg | 11,2 mg | 10,5 mg | 11,6 mg | 11,0 mg |
| unzersetzte Gesamtmenge | 33,5 mg | 40,7 mg | 39,5 mg | 41,5 mg | 31,0 mg |
| zersetzte Menge | 16,5 mg<br>(33 %) | 9,3 mg<br>(18,6 %) | 10,5 mg<br>(21 %) | 8,5 mg<br>(17 %) | 19,0 mg<br>(38 %) |

Die Ergebnisse der Testbeispiele 10 und 11 zeigen, daß die Zusammensetzungen nach der Erfindung gestatten, eine bessere Stabilität und daher auch eine bessere Verwertung der insektiziden Substanz zu erreichen, wobei ein erfindungsgemäß in Betracht gezogener Stabilisator an Stelle eines aus den dem Fachmann bekannten ausgewählten verwendet wird.

Testbeispiel 12

Es wird wie im Testbeispiel 1 unter Verwendung der gleichen Vorrichtung und der nachstehenden Zusammensetzung 12-A verfahren :

| | |
|---|---|
| d-Phenothrin | 50 mg |
| Piperonylbutoxid | 250 mg |
| Cellulose | 880 mg |

Die Vorrichtung wird an eine Wechselstromquelle von 250 V angeschlossen, was gestattet, eine Temperatur von 197 °C zu erreichen.

Die nach dreistündigem Betrieb verdampften und zurückgebliebenen Mengen d-Phenothrin wurden durch Analyse gemessen ; die Ergebnisse waren die folgenden :

| | |
|---|---|
| Menge in der Tablette | 40,0 mg |
| Menge in den Dämpfen | 2,5 mg |
| unzersetzte Gesamtmenge | 42,5 mg |
| zersetzte Menge | 7,5 mg (15 %) |

Diese Ergebnisse sind mit denjenigen, die in den Testbeispielen 2 und 7 erzielt wurden, zu vergleichen. Sie zeigen, daß die Zusammensetzungen nach der Erfindung stabiler sind als diejenigen, die bei Gebrauch einer Verbindung der Familie der Benzodioxole selbst bei einer Zusatzrate von 500 % erhalten werden.

**Ansprüche**

1. Zur Abgabe von insektiziden Dämpfen bei Erhitzung dienende Zusammensetzung, umfassend
A. mindestens eine insektizide Substanz der Pyrethrinoidfamilie
B. gegebenenfalls einen Zusatz, der gegenüber der Substanz A inert und unter Verdünnungsmitteln, Verdickern, Parfümen, Synergisten, Farben, insektenabweisenden Mitteln, festen Trägern und Brennstoffen ausgewählt wird, wobei die besagte Zusammensetzung dadurch gekennzeichnet ist, dass sie
C. einen Stabilisator enthält, ausgewählt unter den Verbindungen der chemischen Formel

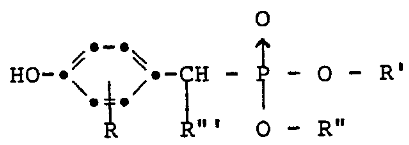

in welcher R einen oder zwei Alkylreste mit 1 bis 12 Kohlenstoffatomen, R′ und R″, die gleich oder verschieden sein können, jedes einen Alkylrest mit 1 bis 18 Kohlenstoffatomen oder R′ und R″ zusammen eine Alkylengruppe mit 2 bis 7 Kohlenstoffatomen, eine 2-Methyl-, 2-Aethyl oder 2,2-Dimethyläthylengruppe oder eine 3-Methyl-, 2-Aethyl-, 2,2-Dimethyl-, 2,2-Diäthyl-, 2-Methyl-2-äthyl-, 2-Methyl-2-propyl- oder 2,2,4-Trimethyl-propylengruppe und R‴ Wasserstoff oder einen Alkylrest mit 1 bis 7 Kohlenstoffatomen darstellen.

2. Zusammensetzung nach Anspruch 1, dadurch gekennzeichnet, dass der Stabilisator ein (3,5-Dialkyl-4-hydroxybenzyl)-phosphonat ist.

3. Zusammensetzung nach Anspruch 2, dadurch gekennzeichnet, daß der Stabilisator ein (3,5-Di-t-butyl-4-hydroxybenzyl)-phosphonat ist.

4. Zusammensetzung nach Anspruch 2, dadurch gekennzeichnet, daß der Stabilisator ein (3,5-Di-t-butyl-4-hydroxybenzyl)-O,O-diäthylphosphonat ist.

5. Zusammensetzung nach Anspruch 1, dadurch gekennzeichnet, daß die insektizide Substanz unter Estern ausgewählt ist, die von einer Säure ausgewählt aus Chrysanthemsäure, 2,2,3,3-Tetra-äthylcyclopropankarbonsäure, 2,2-Dimethyl-3-(2,2-dibrom-vinyl)-cyclopropankarbonsäure und 2,2-Dimethyl-3-(2,2-dichlor-vinyl-cyclopropankarbonsäure in ihren racemischen oder optisch aktiven d und/oder 1, cis und/oder trans-Formen abgeleitet sind.

6. Zusammensetzung nach Anspruch 1, dadurch gekennzeichnet, daß die insektizide Substanz aus den unter den Namen Allethrin, Bioallethrin, S-Bioallethrin, Cinerin, Furethrin, Dimethrin, Benathrin, Kadethrin, Prothrin oder Furamethrin, Proparthrin, Tetramethrin, Resmethrin, Bioresmethrin, Phenothrin, D-Phenothrin, Permethrin, Biopermethrin, Cypermethrin, Bromethrin, Decamethrin und Fluorethrin bekannten Verbindungen ausgewählt ist.

7. Zusammensetzung nach Anspruch 1, dadurch gekennzeichnet, daß sie einen Synergisten ausgewählt unter Benzodioxolen, polychlorierten Äthern und N-Alkyl-5-norbornen-2,3-dicarboximiden enthält.

8. Zusammensetzung nach Anspruch 1, dadurch gekennzeichnet, daß die insektizide Substanz in einem Verhältnis von mindestens 5 % des Gesamtgewichts der Zusammensetzung vorhanden ist.

9. Zusammensetzung nach Anspruch 1, dadurch gekennzeichnet, daß der Stabilisator in einem Verhältnis im Bereich von 5 bis 100 Gewichtsteilen Stabilisator je 100 Teilen der insektiziden Substanz vorhanden ist.

10. Zusammensetzung nach Anspruch 9, dadurch gekennzeichnet, daß der Gehalt an Stabilisator im Bereich von 10 bis 50 Teilen Stabilisator je 100 Teilen der insektiziden Substanz liegt.

**Claims**

1. Composition designed to emit insecticidal vapours on being heated, which composition comprises :
A. at least one insecticidal substance of the pyrethrinoid family, and
B. optionally an additive inert to substance A and selected from among : diluents, thickening agents, perfumes, synergists, colorants, repellents, solid carriers and combustibles, said composition being characterised in that it contains :
C. a stabiliser selected from among the compounds of the chemical formula

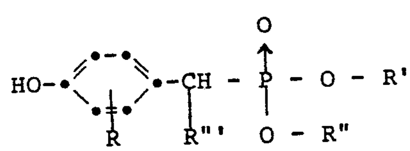

in which R is one or two alkyl groups having 1 to 12 carbon atoms, R' and R", which can be identical or different, are each an alkyl group having 1 to 18 carbon atoms, or R' and R" together are an alkylene group having 2 to 7 carbon atoms, a 2-methyl-, 2-ethyl-, or 2,2-dimethylethylene group, or a 3-methyl-, 2-ethyl-, 2,2-dimethyl-, 2,2-diethyl-, 2-methyl-2-ethyl-, 2-methyl-2-propyl- or 2,2,4-trimethyl-propylene group, and R''' is hydrogen or an alkyl group having 1 to 7 carbon atoms.

2. Composition according to Claim 1, characterised in that the stabiliser is a (3,5-dialkyl-4-hydroxybenzyl)-phosphonate.

3. Composition according to Claim 2, characterised in that the stabiliser is a (3,5-di-t-butyl-4-hydroxybenzyl)-phosphonate.

4. Composition according to Claim 2, characterised in that the stabiliser is a (3,5-di-t-butyl-4-hydroxybenzyl)-O,O-diethyl phosphonate.

5. Composition according to Claim 1, characterised in that the insecticidal substance is selected from among esters derived from an acid selected from the group comprising : chrysanthemic acid, 2,2,3,3-tetra-ethyl-cyclopropanecarboxylic acid, 2,2-dimethyl-3-(2,2-dibromovinyl)-cyclopropanecarboxylic acid and 2,2-dimethyl-3-(2,2-dichlorovinyl-cyclopropanecarboxylic acid in their racemic or optically active d and/or 1, cis and/or trans forms.

6. Composition according to Claim 1, characterised in that the insecticidal substance is selected from the compounds known by the names : allethrin, bioallethrin, S-bioallethrin, cinerin, furethrin, dimethrin, benathrin, kadethrin, prothrin or furamethrin, proparthrin, tetramethrin, resmethrin, bioresmethrin, phenothrin, d-phenothrin, permethrin, biopermethrin, cypermethrin, bromethrin, decamethrin and fluorethrin.

7. Composition according to Claim 1, characterised in that it contains a synergist selected from among : benzodioxoles, polychlorinated ethers and N-alkyl-5-norbornene-2,3-dicarboximides.

8. Composition according to Claim 1, characterised in that the insecticidal substance is present in a proportion equal to at least 5 % of the total weight of the composition.

9. Composition according to Claim 1, characterised in that the stabiliser is present in a ratio of between 5 and 100 parts by weight of stabiliser to 100 parts of the insecticidal substance.

10. Composition according to Claim 9, characterised in that the content of stabiliser is between 10 and 50 parts of stabiliser to 100 parts of the insecticidal substance.

**Revendications**

1. Composition destinée à l'émission de vapeurs insecticides par chauffage et comprenant :

A. au moins une substance insecticide de la famille des pyréthrinoïdes ;

B. éventuellement, un adjuvant inerte envers la substance A et choisi parmi les diluants, les agents épaississants, les parfums, les produits synergiques, les colorants, les répulsifs, les supports solides et les combustibles, ladite composition étant caractérisée en ce qu'elle contient :

C. un stabilisant choisi parmi les composés ayant la formule chimique

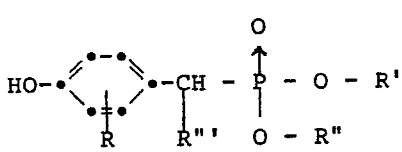

dans laquelle R représente un ou deux restes alkyle contenant un à douze atomes de carbone ; R' et R", semblables ou différents, représentent chacun un reste alkyle contenant 1 à 18 atomes de carbone ou R' et R" ensemble représentent un groupe alkylène contenant 2 à 7 atomes de carbone un groupe 2-méthyl-, 2-éthyl ou 2,2-diméthyléthylène ou un groupe 3-méthyl-, 2-éthyl-, 2,2-diméthyl-, 2,2-diéthyl-, 2-méthyl-2-éthyl-, 2-méthyl-2-propyl- ou 2,2,4-triméthyl-propylène et R''' représente un atome d'hydrogène ou un reste alkyle contenant 1 à 7 atomes de carbone.

2. Composition selon la revendication 1, caractérisée en ce que le stabilisant est un (3,5-dialkyl-4-hydroxybenzyl)phosphonate.

3. Composition selon la revendication 2, caractérisée en ce que le stabilisant est un (3,5-ditertiobutyl-4-hydroxybenzyl)phosphonate.

4. Composition selon la revendication 2, caractérisée en ce que le stabilisant est le (3,5-ditertiobutyl-4-hydroxybenzyl)O,O-diéthyl-phosphonate.

5. Composition selon la revendication 1, caractérisée en ce que la substance insecticide est choisie parmi les esters dérivés d'un acide choisi parmi l'acide chrysanthémique, l'acide 2,2,3,3-tétra-éthyl-cyclopropanecarboxylique, l'acide 2,2-diméthyl-3-(2,2-dibromo-vinyl)-cyclopropanecarboxylique et l'acide 2,2-diméthyl-3-(2,2-dichlorovinyl-cyclopropanecarboxylique sous leurs formes racémiques ou optiquement activés d et/ou l, cis et/ou trans.

6. Composition selon la revendication 1, caractérisée en ce que la substance insecticide est choisie parmi les composés connus sous les noms de alléthrine, bioallétrine, S-bioalléthrine, cinérine, furéthrine,

diméthrine, bénathrine, kadéthrine, prothrine ou furaméthrine, proparthrine, tétraméthrine, resméthrine, bioresméthrine, phénothrine, d-phénothrine, perméthrine, bioperméthrine, cyperméthrine, brométhrine, décaméthrine et fluoréthrine.

7. Composition selon la revendication 1, caractérisée en ce qu'elle contient un produit synergique choisi parmi les benzodioxoles, les éthers-oxydes polychlorés et les N-alkyl-5-norbornène-2,3-dicarboximides.

8. Composition selon la revendication 1, caractérisée en ce que la substance insecticide est présente dans une porportion au moins égale à 5 % du poids total de la composition.

9. Composition selon la revendication 1, caractérisée en ce que le stabilisant est présent dans une proportion comprise entre 5 et 100 parties en poids de stabilisant pour 100 parties de substance insecticide.

10. Composition conforme à la revendication 9, caractérisée en ce que la proportion de stabilisant est comprise entre 10 et 50 parties de stabilisant pour 100 parties de substance insecticide.